# EUROPÄISCHE PATENTSCHRIFT

(11) **EP 4 530 173 B1**
(45) Veröffentlichungstag und Bekanntmachung des Hinweises auf die Patenterteilung: **16.07.2025**
(21) Anmeldenummer: 24189025.0
(22) Anmeldetag: 16.07.2024
(51) Int. Cl.: B62K 5/10, B62K 5/08, B62K 5/05, B62D 9/02

(54) **NEIGEFAHRZEUG MIT NEIGEFAHRWERK MIT DIREKTER NEIGESTEUERUNG UND LENKUNG**
TILTING VEHICLE WITH TILTING CHASSIS WITH DIRECT TILTING CONTROL AND STEERING
VÉHICULE INCLINABLE AVEC CHÂSSIS INCLINABLE AVEC COMMANDE D'INCLINAISON DIRECTE ET DIRECTION

(30) Priorität: 01.10.2023 DE 102023004000
(43) Veröffentlichungstag der Anmeldung: 02.04.2025
(73) Patentinhaber: Omari, Ahmad, 4720 Kelmis (BE)
(72) Erfinder: Omari, Ahmad, 4720 Kelmis (BE)

(56) Entgegenhaltungen:
- DE-C1- 19 838 328
- US-B1- 6 402 174
- HORWITZ RICKY: "Recumbent Trike Design Primer The Recumbent Trike Design Primer", HELL-BENT, 1 January 2010 (2010-01-01), pages 1 - 37, XP055943185, Retrieved from the Internet <URL:https://www.ethicallogistics.org/Bikes/Recumbent%20Trike%20Design%20Primer.pdf> [retrieved on 20220715]

## Beschreibung

Die Erfindung betrifft eine Neigefahrzeug mit mindestens einem Neigefahrwerk mit direkter Neigesteuerung und Lenkung.

Neigefahrzeuge unterscheiden sich von herkömmlichen Fahrzeugen dadurch, dass Fahrzeugrahmen und Aufbau des Fahrzeugs während einer Kurvenfahrt zur Kurveninnenseite geneigt werden können.

Neigefahrzeuge lassen sich gemäß Ihrer Neigesteuerung in zwei Kategorien unterteilen; nämlich Fahrzeuge mit direkter Neigesteuerung und Fahrzeuge mit indirekter Neigesteuerung.

Bei einer indirekten Neigesteuerung steuert der Fahrer die Fahrzeugneigung mittels des Fahrzeuglenkers indirekt, in dem er Lenkmanöver absolviert, die eine stetige Balance mit der Fliehkraft erzielen.

Das wohl bekannteste Fahrzeug mit indirekter Neigesteuerung ist das Herkömmliche Fahrrad. Hier wird die Fahrzeugneigung indirekt über ein Gegenlenkmanöver gesteuert. Das bedeutet; wenn der Fahrer beispielsweise eine Rechtskurve fahren möchte, muss er zunächst nach links lenken, sodass sich das Fahrzeug durch die Fliehkraft nach rechts neigt. Wenn das Fahrzeug nach rechts geneigt ist, kann der Fahrer nach rechts lenken und so die angestrebte Rechtskurve fahren.

Eine indirekte Neigesteuerung mittels gegenlenken bedarf eine gewisse Übung des Fahrers, was aber im Regelfall lernbar ist. Jeder Fahrradfahrer und/oder Motorradfahrer beherrscht diese Technik und führt sie intuitiv aus.

Eine indirekte Neigesteuerung bedarf bis auf die Lenkkräfte keine weiteren vom Fahrer ausgeübten Kräfte um das Fahrzeug zu neigen. Sowohl zum Neigen als auch zum Aufrichten des Fahrzeugs nutzt der Fahrer die Fliehkraft selbst.

Eine indirekte Neigesteuerung bedarf eine minimale Fahrzeuggeschwindigkeit, denn ohne das Vorhandensein einer Geschwindigkeit existiert keine Fliehkraft, welche ein essenzieller Bestandteil der indirekten Neigesteuerung ist.

Bei unzureichender Geschwindigkeit gerät ein Fahrzeug mit indirekter Neigesteuerung in eine instabile Lage. Beim Herkömmlichen Fahrrad wird dieses Problem einfach gelöst, in dem der Fahrer einen Fuß auf die Fahrbahn absetzt und das Gefährt stabilisiert. Allerdings bedarf ein solches Fuß-auf-die-Fahrbahn-Manöver eine dafür passende, meist aufrechte Fahrerposition mit nach unten gestreckten Beinen. Eine solche aufrechte Fahrerposition ist nicht bei allen Fahrzeugen gegeben. Zum Beispiel, bei einem Liegefahrrad ist eine solche aufrechte Fahrerpositionierung nicht gegeben, wodurch es schwierig ist einen Fuß auf der Fahrbahn abzusetzen, um das Liegefahrrad im Stop-and-Go Verkehr zu Stabilisieren.

Im Stand der Technik sind Dreirädrige Fahrräder und/oder Dreirädrige Motorräder mit neigetechink bekannt, sogenannte Neige-Trikes. Diese lassen sich anhand der Fahrerposition in zwei Kategorien unterteilen, nämlich Neige-Trikes mit aufrechter Fahrerposition, vergleichbar mit der Fahrerposition eines herkömmlichen Fahrrads oder Motorrads, und Neige-Trikes mit Liegender Fahrerposition, hiernach als Neige-Liege-Trikes bezeichnet. Neige-Liege-Trikes sind durch eine Sitzende oder nahezu Liegende Fahrerposition charakterisiert, wobei der Fahrer seine Beine in Fahrtrichtung ausstreckt.

Ein Neige-Trike mit aufrechter Fahrerposition lässt sich ähnlich wie ein Herkömmliches Fahrrad mit Indirekter Neigesteuerung steuern. Im Falle unzureichender Geschwindigkeit, kann der Fahrer das Neige-Trike mittels des Absetzens eines Fußes auf der Fahrbahn Stabilisieren. Demnach lässt sich ein Neige-Trike mit aufrechter Fahrerposition problemlos mittels indirekter Neigesteuerung auch im Stop-and-Go-Verkehr steuern.

Bei einem Neige-Liege-Trike ist es aufgrund der nahezu liegenden Fahrerposition schwierig einen Fuß auf der Fahrbahn abzusetzen, weshalb Neige-Liege-Trikes bei geringer Geschwindigkeit und insbesondere im Stop-and-Go verkehr schwer zu steuern sind. Eine mögliche Lösung des Problems ist mittels einer direkten Neigesteuerung.

Bei einer direkten Neigesteuerung besteht eine mechanische Verbindung zwischen einem Steuerelement und dem Neigefahrwerk, sodass der Fahrer mittels des Steuerelements die Fahrzeugneigung Steuern kann, unabhängig von Kurvenlage, Geschwindigkeit und Fliehkraft.

Mittels einer direkten Neigesteuerung ist es möglich, das Fahrzeug entgegen der Fliehkraft zu neigen. Tritt ein solcher Fall auf, werden hohe Kräfte benötigt, um das Fahrzeug entgegen der Fliehkraft zu neigen. Je schwerer das Fahrzeug und je höher der Schwerpunkt, desto höher die Kräfte die von einem direkten Neigesteuerungssystem überwunden werden müssen.

Im Stad der Technik sind Systeme zur direkten Neigesteuerung bekannt. US 6 402 174 B1 offenbart ein Neige-Liege-Trike mit direkter Neigesteuerung entsprechend der Preambel des Anspruchs 1.

Die geometrische Ausführung ist vorteilhaft für leichte Neigefahrzeuge mit niedrigem Schwerpunkt, in denen der Fahrer die Neigesteuerung und somit die Rollbewegung des Fahrzeugs mittels Muskelkraft in Liegender Position durchführen kann. Die Neigesteuerung wird mittels einem am Fahrwerk angebrachten Hebelpaar durchgeführt. Dasselbe Hebelpaar ist auch für die Lenksteuerung zuständig. Die Lenksteuerung wird erzielt, indem das Hebelpaar um eine Fahrzeugquerachse in entgegengesetzter Richtung gedreht wird. Eine solche Auslegung der Lenksteuerung ist ergonomisch nachteilig, denn die Einlenkung erfordert eine signifikante Einknickung des Handgelenkwinkels. Ein weiterer Nachteil des in US 6 402 174 B1 Offenbarten Fahrwerks ist das nicht Vorhandenseins eines Federdämpfersystems, sodass Fahrbahnunebenheiten direkt im Hebelpaar und Schließlich in den Händen des Fahrers ungedämpft Einwirken.

EP 3 431 352 B1 und US 8 360 440 B2 offenbaren eine Direkte Neigesteuerung für Dreirädrige Motorräder. Hier wird die Neigesteuerung nicht vom Fahrer mittels Muskelkraft, sondern von einer elektronischen Steuereinheit und einem elektrischen Aktuator durchgeführt. Dies ist auch notwendig, wenn man bedenkt das es sich beim Einsatzzweck um schwere Motorräder handelt, die unter anderem sehr hohe Geschwindigkeiten erreichen können. In solchen Anwendungen ist es aus Sicherheitsgründen vorteilhaft eine elektronische Neigesteuerung zu implementieren, welche eine geringere Fehlerquote im Vergleich zur menschlichen Fehlerquote aufweist. Zudem ist es vorteilhaft einen Elektrischen Aktuator zu implementieren, welcher höhere Kräfte im Vergleich zur menschlichen Muskelkraft aufbringen kann. Für den Einsatz in einem leichten Neige-Liege-Fahrzeug mit geringem Gewicht und Schwerpunkt ist eine solche Technik zu Aufwendig.

DE 10 2012 003 894 A1 offenbart eine Vorderachsvorrichtung für ein dreispuriges Fahrzeug. Die Vorderachsvorrichtung ermöglicht eine Neigung des Fahrzeugs, wobei die Neigung an die Lenkung gekoppelt ist, sodass der Neigungswinkel von dem Lenkwinkel Abhängig ist. Die Abhängigkeit wird durch eine mechanische Koppelung erzielt, die nicht vom Fahrer während der Fahrt beeinflusst werden kann. Somit kann die Abhängigkeit lediglich für einen engen Geschwindigkeitsbereich vorteilhaft ausgelegt werden. Für Fahrzeuge mit einem breiten Geschwindigkeitsbereich ist die Auslegung nachteilig.

Die im Stand der Technik bekannten Lösungen sind nachteilig für den Anwendungsfall eines leichten Neigefahrzeugs mit niedrigem Schwerpunkt und nahezu Liegender Fahrerposition, in dem der Fahrer die Neigung mittels der Muskelkraft seiner Armen steuert. Dieses Problem liegt der Erfindung zu Grunde. Ziel ist ein Neigefahrwerk für ein Neigefahrzeug mit direkter Neigesteuerung und Lenksteuerung, in dem sowohl die Lenksteuerung als auch die Neigesteuerung vom Fahrer in liegender Sitzposition ergonomisch und mittels Muskelkraft ausgeübt und angetrieben werden kann. Vorzugsweise soll das Neigefahrwerk eine gedämpfte Einzelradaufhängung und unabhängig davon eine gedämpfte Rollbewegung des Fahrzeugs ermöglichen. Vorzugsweise soll das Fahrwerk eine Neigesteuerung möglichst unabhängig von der Lenksteuerung ermöglichen, wobei beide Steuerrungen mittels dem ein und demselben Lenker absolviert werden können.

Das Problem wird geflößt, mittels einem Neigefahrwerk in einem Neigefahrzeug mit direkter Neigesteuerung und Lenkung, gemäß Anspruch 1 und den Abhängigen Ansprüchen.

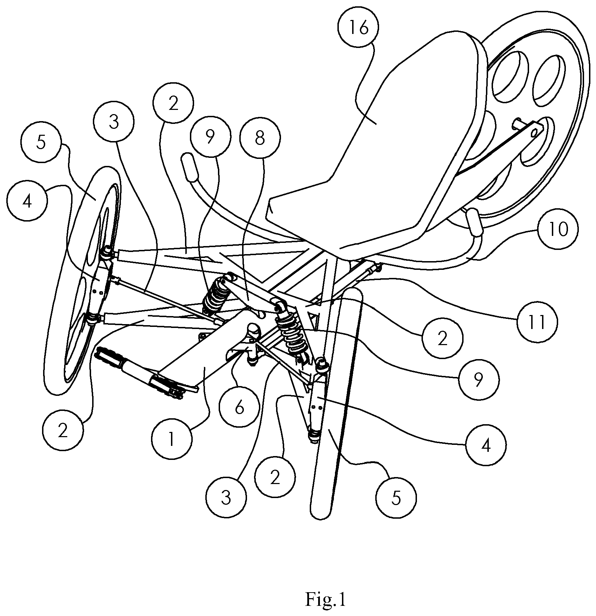

Das Erfindungsgemäße Neigefahrzeug mit einem Neigefahrwerk mit direkter Neigesteuerung und Lenkung wird in Fig.1 bis Fig.5 anhand mehreren Ausführungsbeispiel Beschrieben. In allen beschriebenen Ausführungsbeispielen ist das Erfindungsgemäße Neigefahrzeug ein Neige-Liege-Trike indem das Neigefahrwerk als Vorderachse fungiert und die Hinterachse aus einem einzelnen Rad besteht. Diese Konfiguration versteht sich als beispielhaft und wurde gewählt, um die Darstellung in den Figuren zu vereinfachen. Sie ist repräsentativ für weitere Konfigurationen, etwa ein Neige-Liege-Trike mit einem einzigen Rad an der Vorderachse und einem Neigefahrwerk an der Hinterachse, oder ein Neige-Liege-Quad mit einem Neigefahrwerk jeweils an der Vorderachse und an der Hinterachse. Solche alternativen Konfigurationen verstehen sich als Bestandteil dieser Erfindung.

Das Erfindungsgemäße Neigefahrzeug und Neigefahrwerk wird dergestalt ausgeführt, dass neben der direkten Neigesteuerung auch eine Einzelradaufhängung möglich ist und somit Fahrbahnunebenheiten bestmöglich gedämpft werden können. Der Begriff Einzelradaufhängung bezieht sich auf das Merkmal, dass jedes aufgehangen Rad im Wesentlichen unabhängig von den anderen Rädern Einfedern und gedämpft werden kann. Dabei ist es unerheblich, welche Mittel zur Radaufhängung eingesetzt werden, etwa Querlenker oder Längslenker. Es ist ebenso unerheblich welche Mittel zum Federn und zum Dämpfen eingesetzt werden, etwa Spiralfedern oder Blattfedern, Gasdämpfer oder Öldämpfer. Der Begriff Einzelradaufhängung ist auch nicht auf das Vorhandensein von Rädern beschränkt und kann beispielsweise auch auf ein Ski-Mobil angewendet werden, indem Skier anstelle von Rädern am Fahrwerk angebunden sind, sodass jeder einzelne Ski im Wesentlichen unabhängig von den anderen Skiern Einfedern und/oder gedämpft werden kann.

Das Erfindungsgemäße Neigefahrwerk wird mechanisch ausgeführt und die Neigebewegung wird vom Fahrer mittels des Lenkers gesteuert und angetrieben. Demnach muss der Fahrer die gesamten Kräfte zur Neigesteuerung mit den Armen selbst aufbringen. Damit ist das Neigefahrwerk insbesondere für leichte Fahrzeuge mit niedrigem Schwerpunkt konzipiert, sprich Fahrzeuge, bei denen die Rollkräfte gering ausfallen. Bei schweren Fahrzeugen mit hohem Schwerpunkt wären die erforderlichen Rollkräfte zu hoch, um sie mit den bloßen Armen des Fahrers entgegen der Fliehkraft zu überwinden.

Ein erstes Ausführungsbeispiel des Neigefahrzeugs mit einem Neigefahrwerk mit direkter Neigesteuerung und Lenkung umfasst einen Fahrzeugrahmen (1), einen Fahrersitz (16), ein Hinterrad, eine Rollkontrollwelle (7), einen Lenker (10), mindestens eine Lenkstange (11), einen Lenkschenkel (6), und ein Neigefahrwerk, letzteres umfassend vier Querlenker (2), zwei Radträger (4), zwei Spurstangen (3), zwei Räder (5), einen Rocker (8), zwei Federdämpfer (9). Fig.1, Fig.2, Fig.3 und Fig.4 zeigen die gelisteten Bauteile und deren Verbindungen aus unterschiedlichen Perspektiven und in unterschiedlichen Schnittansichten.

Der Fahrzeugrahmen (1) weist Anbindungsstellen zum Neigefahrwerk und zur Lenkung auf und ist fest mit dem Fahrersitz (16) verbunden.

Die Querlenker (2) sind jeweils rotatorisch an dem Fahrzeugrahmen (1) und gelenkig an einem Radträger (4) befestigt. Jeweils ein Rad (5) ist an einem Radträger (4) gelagert. Jeweils eine Spurstange (3) ist an einem ende an einem Radträger (4) gelenkig befestigt und am anderen Ende am Lenkschenkel (6) gelenkig befestigt. Je ein Federdämpfer (9) ist an einem ende rotatorisch am Rocker (8) befestigt und am anderen Ende rotatorisch an einem Querlenker (2) befestigt.

Je zwei Querlenker (2), ein Federdämpfer (9) und ein Radträger (4) fungieren als Einzelradaufhängung.

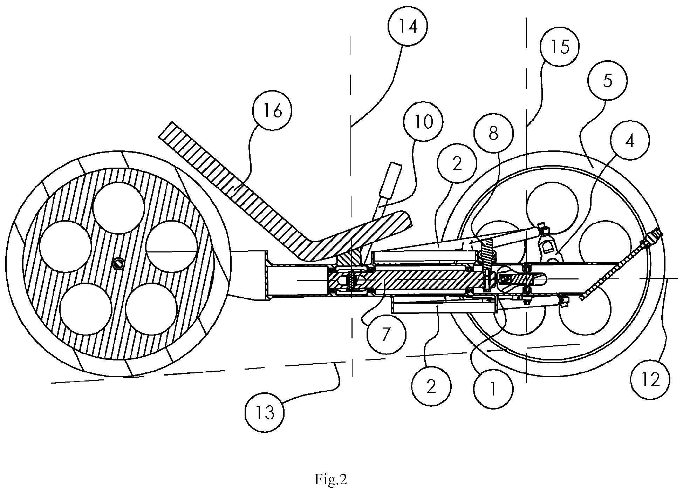

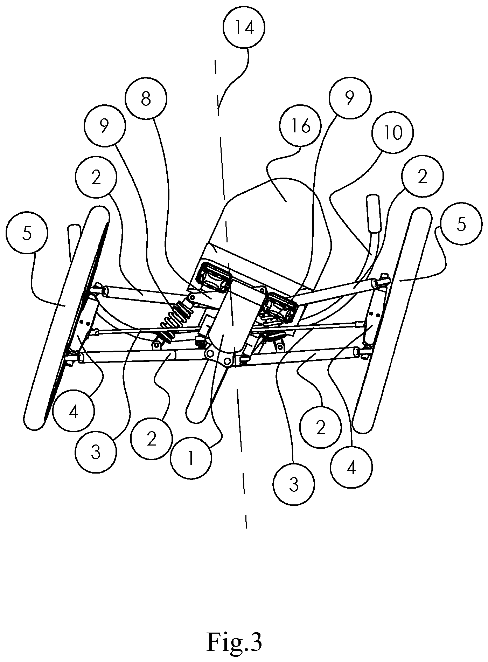

Fig.2 zeigt Bauteile und Verbindungen, die für den Neigevorgang maßgebend sind. Die Rollkontrollwelle (7) ist in dem Fahrzeugrahmen (1) rotatorisch gelagert, dergestalt das sich die Rollkontrollwelle (7) um eine Rollkontrollachse (12) drehen kann. Die Rollkontrollachse (12) ist vorzugsweise annähernd Parallel (0+-20°) zur Fahrzeuglängsachse und/oder zur Fahrzeugrollachse (13) ausgerichtet. Der Lenker (10) ist rotatorisch um eine Lenkerachse (14) in der Rollkontrollwelle (7) gelagert. Die Lenkerachse (14) ist vorzugsweise orthogonal (90° +-15°) zu der Rollkontrollachse (12) ausgerichtet. Der Rocker (8) ist fest mit der Rollkontrollwelle (7) verbunden. Eine Rotation des Lenkers (10) um die Rollkontrollachse (12) bewirkt eine Rotation der Rollkontrollwelle (7) und damit eine Neigung des Rockers (8). Durch die Neigung des Rockers (8) werden Federdämpfer (9) und schließlich die Querlenker (2) dergestalt bewegt, dass eine Neigung des Fahrzeugrahmens (1) resultiert. Eine solche Neigung ist in Fig.3 dargestellt. Charakteristisch für den Neigevorgang ist, dass der Fahrer den Lenker (10) respektive zum Fahrzeugrahmen (1) in entgegengesetzter Richtung zur Fahrzeugneigung neigt und dass damit die Lenkerachse (14) nahezu orthogonal (90 +-10°) zur Fahrbahnebene bleibt.

In dem beschriebenen Ersten Ausführungsbeispiel sind die Federdämpfer (9) direkt an dem Rocker (8) angebunden. Je nach Gegebenheiten des Fahrzeugrahmens und insbesondere bei einem breiten Fahrzeugrahmen ist eine solche Anbindung nicht immer realisierbar. Bei einem breiten Fahrzeugrahmen kann es vorteilhaft sein, die Federdämpfer (9) über Umlenkelemente an den Rocker (8) anzubinden. Verschiedenste Ausführungen von Umlenkelementen sind denkbar und verstehen sich als untervarianten der Ersten Ausführung, solange eine Neigung des Rockers (8) den Federdämpfer (9) relativ zum Fahrzeugrahmen (1) verschiebt, dergestalt, dass eine Neigung des Neigefahrzeug resultiert.

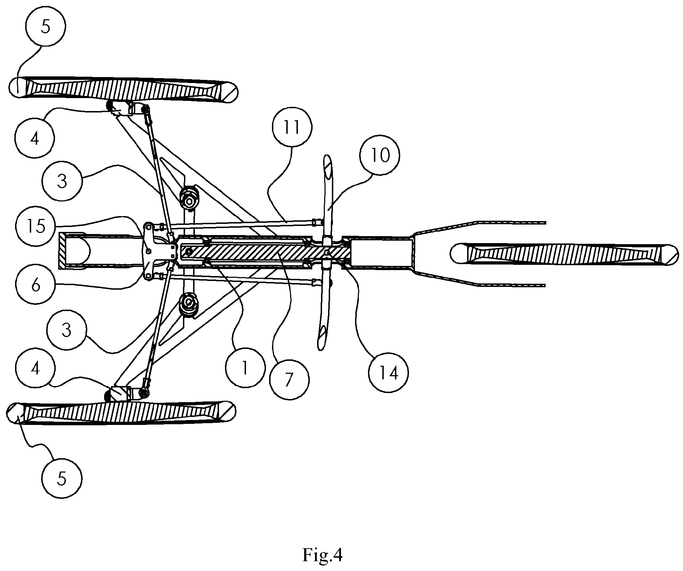

Fig.2 und Fig. 4 zeigen Elemente und Verbindungen, die für den Lenkvorgang maßgebend sind. Der Lenkschenkel (6) ist in dem Fahrzeugrahmen (1) um eine Lenkschenkelachse (15) rotatorisch gelagert. Die Lenkschenkelachse (15) ist vorzugsweise orthogonal (90° +- 15°) zur Rollkontrollachse (12) ausgerichtet. Die mindestens eine Lenkstange (11) ist an einem Ende gelenkig mit dem Lenker (10) verbunden und am anderen Ende gelenkig mit dem Lenkschenkel (6) verbunden, dergestalt, dass eine Rotation des Lenkers (10) um die Lenkerachse (14) eine Rotation des Lenkschenkels (6) um die Lenkschenkelachse (15) bewirkt. Die Spurstangen (3) sind jeweils an einem Ende gelenkig mit dem Lenkschenkel (6) verbunden und am anderen Ende gelenkig mit einem Radträger (4) verbunden, dergestalt, dass eine Rotation des Lenkschenkels (6) um die Lenkschenkelachse (15) eine Lenkung der Radträger (4) und schließlich der Räder (5) bewirkt.

Fig.2 zeigt, dass der Lenker (10) Rotatorisch in der Rollkontrollwelle (7) gelagert ist, dergestalt, dass die Rotatorische Verbindungssachse zwischen Lenker (10) und Rollkontrollwelle (7) vorzugsweise orthogonal zur Rollkontrollachse (12) ist. Die Orthogonalität bewirkt, dass der Lenker (10) um zwei Achsen gedreht werden kann, nämlich um die Rollkontrollachse (12) und um die Lenkerachse (14), sodass eine der Drehachsen zur Steuerung der Fahrzeugneigung benutzt wird und die andere Drehachse zur Steuerung der Fahrzeuglenkung.

Eine Rotation des Lenkers (10) um die Rollkontrollachse (12) bewirkt eine Rotation der Rollkontrollwelle (7) und somit eine Neigung des Neigefahrwerks. Somit wird eine direkte Neigesteuerung mittels einem rotieren des Lenkers (10) um die Rollkontrollachse (12) erzielt.

Eine Rotation des Lenkers (10) um die Lenkerachse (14) wird mittels der Lenkstange (11), des Lenkschenkels (6), der Spurstangen (3) und der Radträger (4) in eine Lenkbewegung der Räder (5) übertragen. Somit wird eine direkte Lenksteuerung mittels einem rotieren des Lenkers (10) um die Lenkerachse (14) erzielt.

Um einen etwaigen Quereinfluss zwischen Neigesteuerung und Lenksteuerung zu minimieren, ist es vorteilhaft, den Abstand zwischen Lenkerachse (14) und Lenkschenkelachse (15) zu maximieren.

Ein zweites Ausführungsbeispiel des Neigefahrzeugs mit einem Neigefahrwerk mit direkter Neigesteuerung und Lenkung basiert auf dem Ersten Ausführungsbeispiel, wird jedoch vereinfacht, indem der Rocker (8) und die Federdämpfer (9) entfallen. An deren Stelle kommt eine Rollkontrollblattfeder (17) zum Einsatz. Die Rollkontrollblattfeder (17) erstreckt sich orthogonal zur Rollkontrollachse (7) und wird inmitten der Rollkontrollblattfeder (17) an der Rollkontrollwelle (7) fest angebunden, sodass eine Rotation der Rollkontrollwelle (7) die Rollkontrollblattfeder (17) um die Rollkontrollachse (12) neigt. Das in Fahrtrichtung rechte und linke Ende der Rollkontrollblattfeder (17) wird an einem rechten und an einem linken Querlenker rotatorisch oder gelenkig angebunden, dergestalt, dass eine Neigung der Rollkontrollblattfeder (17) die angebundenen Querlenker neigt und damit eine Neigung des Neigefahrzeugs bewirkt.

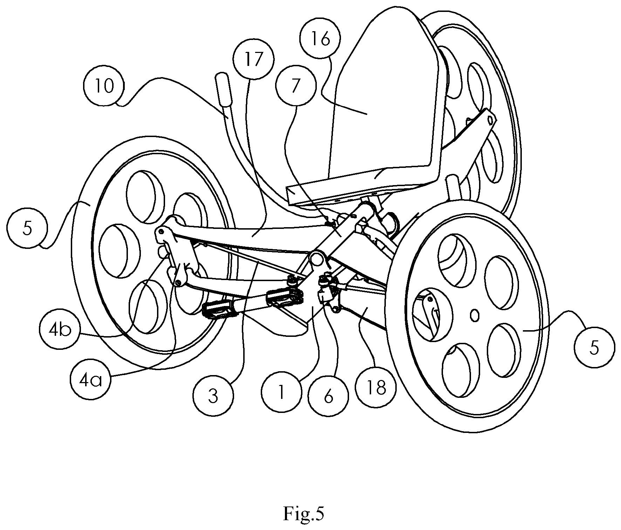

Ein Drittes Ausführungsbeispiel des Neigefahrzeugs mit einem Neigefahrwerk mit direkter Neigesteuerung und Lenkung ist in Fig.5 dargestellt. Das Dritte Ausführungsbeispiel basiert auf dem Ersten Ausführungsbeispiel, wird jedoch vereinfacht, indem die vier Querlenker (2) der Rocker (8) und die zwei Federdämpfer (9) entfallen. An deren Stelle kommt eine Rollkontrollblattfeder (17) und eine Wippblattfeder (18) zum Einsatz. Die Rollkontrollblattfeder (17) wird inmitten der Rollkontrollblattfeder (17) an der Rollkontrollwelle (7) fest angebunden, sodass eine Rotation der Rollkontrollwelle (7) die Rollkontrollblattfeder (17) um die Rollkontrollachse (12) neigt. Die Wippblattfeder (18) wird inmitten der Wippblattfeder (18) rotatorisch an dem Fahrzeugrahmen (1) angebunden, sodass sich die Wippblattfeder (18) um eine Achse parallel zur Rollkontrollachse (12) frei rotieren kann. Das in Fahrtrichtung rechte und linke Ende der Wippblattfeder (18) wird an einem rechten und an einem linken Radträger (4a) rotatorisch angebunden. Das in Fahrtrichtung rechte und linke Ende der Rollkontrollblattfeder (17) wird an einem rechten und an einem linken Radträger rotatorisch angebunden. Eine Neigung des Lenkers (10) um die Rollkontrollachse (12) rotiert die Rollkontrollwelle (7) und neigt damit die Rollkontrollblattfeder (17), wodurch sich das Neigefahrwerk und schließlich das Neigefahrzeug neigt.

Ein weiterer Unterschied zwischen dem ersten und dem dritten Ausführungsbeispiel betrifft den Radträger und wird aus Fig.1 und Fig.5 ersichtlich. In dem ersten Ausführungsbeispiel kommt ein einteiliger Radträger (4) zum Einsatz, welcher fest mit der Radachse verbunden ist und mittels Kugelgelenke an den Querlenkern (2) angebunden ist. Die Kugelgelenke ermöglichen dem Einteiligen Radträger (4) sowohl eine Schwenkbewegung als auch eine Lenkbewegung. Im dritten Ausführungsbeispiel kommt ein zweiteiliger Radträger zum Einsatz, bestehen aus einem Schwenkteil (4a) und einem Achsschenkel (4b), wobei der Achsschenkel (4b) in dem Schwenkteil (4a) um eine im Wesentlichen vertikale Achse rotieren kann und somit den Freiheitsgrad für die Lenkung bereitstellt. Das dritte Ausführungsbeispiel des Neigefahrzeugs ist nicht auf einen zweiteiligen Radträger (4a,4b) beschränkt und kann auch mittels einem einteiligen Radträger (4) ausgestattet werden. Dasselbe gilt für das Neigefahrzeug im ersten und im zweiten Ausführungsbeispiel, welche nicht auf einen einteiligen Radträger (4) beschränkt sind und mit einem zweiteiligen Radträger (4a,4b) ausgestattet werden können. Die Auswahl der Radträgerart ist für die Funktion des Neigefahrzeugs unerheblich und lediglich Auslegungssache. Üblicherweise ermöglicht ein zweiteiliger Radträger (4a,4b) einen höheren Neigewinkel im Vergleich zum einteiligen Radträger. Der Einteilige Radträger hingegen ist im Regelfall leichter und einfacher zu Fertigen.

Es sind weitere Ausführungsbeispiele des Neigefahrzeugs mit einem Neigefahrwerk mit direkter Neigesteuerung und Lenkung denkbar, etwa eine Kombination aus dem ersten und dem dritten Ausführungsbeispiel. In einem solchen vierten Ausführungsbeispiel wird die Wippblattfeder (18) aus dem dritten Ausführungsbeispiel mit zwei Querlenkern (2) aus dem ersten Ausführungsbeispiel ersetzt. Das Wesentliche Funktionsprinzip des Neigens mittels des Drehens des Lenkers (10) um die Rollkontrollachse (12) beleibt bei allen Ausführungen gleich.

Ein fünftes Ausführungsbeispiel des Neigefahrzeugs mit einem Neigefahrwerk mit direkter Neigesteuerung und Lenkung basiert auf einem der vorhergehenden Ausführungsbeispiele, wird jedoch vereinfacht, sodass Lenkstangen (11) und der Lenkschenkel (6) entfallen. Stattdessen werden Spurstangen (3) direkt mit dem Lenker (10) gelenkig verbunden und somit die Lenkbewegung vom Lenker (10) direkt auf die Radträger (4) und oder die Achsschenkel (4b) übertragen.

In allen beschriebenen Ausführungsbeispielen werden jegliche auf dem Neigefahrzeug wirkende Rollkräfte durch die Rollkontrollwelle (7) in den Lenker (10) geleitet, sodass diese Rollkräfte vom Fahrer am Lenker (10) abgefangen werden müssen. Im Gegensatz zur Fliehkraft, welche niederfrequente Rollkräfte verursacht, können Fahrbahnunebenheiten Hochfrequente Rollkräfte verursachen. Das Abfangen von hochfrequenten Rollkräften am Lenker (10) verschlechtert den Fahrkomfort. Um dem entgegenzuwirken, ist es vorteilhaft, die Hochfrequente Rollbewegung zu dämpfen. Vorzugsweise werden hierzu Gasdruckdämpfer eingesetzt, welche charakteristisch eine hohe Dämpfung und gleichzeitig eine geringen, bis keine Federrate aufweisen, sodass deren Dämpfwirkung einer etwaigen Federwirkung übergeordnet ist.

In einem weiteren Ausführungsbeispiel des Erfindungsgemäßen Neigefahrzeugs mit einem Neigefahrwerks mit direkter Neigesteuerung und Lenkung werden zwei Gasdruckdämpfer eingesetzt, wobei die Gasdruckdämpfer jeweils an einem ende an dem Fahrzeugrahmen (1) angebunden sind und am anderen Ende an der Rollkontrollwelle (7) und/oder an zwei Querlenkern (2) und/oder an einer Wippblattfeder (18) angebunden sind, dergestalt, dass eine hochfrequente Neigebewegung des Neigefahrwerks gedämpft wird. Zudem können aus dem Stand der Technik bekannte Blockierbare Gasdruckdämpfer eingesetzt werden, welche mittels Knopfdruck vom Fahrer blockiert werden können. Eine Blockierung der Gasdruckdämpfer bewirk eine Blockierung der Neigebewegung des Fahrzeugs, sollte dies aus gewissen Gründen gewünscht sein, etwa beim Einsteigen und beim Aussteigen aus dem Fahrzeug.

## Patentansprüche

1. Mehrspuriges Neigefahrzeug mit direkter Neigesteuerung und Lenkung, umfassend ein zweispuriges Neigefahrwerk an der Vorderachse und/oder ein zweispuriges Neigefahrwerk an der Hinterachse, einen Fahrzeugrahmen (1), eine Rollkontrollwelle (7), einen Lenker (10), Räder (5) und/oder Skier, wobei die Rollkontrollwelle (7) rotatorisch um eine Rollkontrollachse (12) in dem Fahrzeugrahmen (1) gelagert ist, die Rollkontrollachse (12) weitestgehend parallel (0 +-20°) zur Fahrzeuglängsachse und/oder zur Fahrzeugrollachse ausgerichtet ist, der Lenker (10) in der Rollkontrollwelle (7) rotatorisch um eine Lenkerachse (14) gelagert ist und die Lenkerachse (14) weitestgehend orthogonal (90 +-20°) zur Rollkontrollachse (12) ausgerichtet ist, **dadurch gekennzeichnet, dass** das mindestens eine zweispuriges Neigefahrwerk ein Neigen des Fahrzeugrahmens (1) um die Fahrzeugrollachse ermöglicht und eine gefederte Einzelradaufhängung und/oder Einzelskiaufhängung aufweist, der Lenker (10) jeweils um die Rollkontrollachse (12) und um die Lenkerachse (14) gedreht werden kann, eine Rotation des Lenkers (10) um die Lenkerachse (14) eine Lenkung des Neigefahrzeugs bewirkt, eine Rotation des Lenkers (10) um die Rollkontrollachse (12) ein Neigen des Neigefahrzeugs bewirkt, die Neigung und die Lenkung mit dem ein und demselben Lenker (10) unabhängig voneinander absolviert werden können

2. Zweispuriges Neigefahrwerk in einem Neigefahrzeug gemäß Anspruch 1, umfassend je Neigefahrwerk vier Querlenker (2), zwei Radträger (4), einen Rocker (8) und zwei Federdämpfer (9), wobei jeweils zwei Querlenker (2) rotatorisch oder gelenkig mit dem Fahrzeugrahmen (1) und rotatorisch oder gelenkig mit einem Radträger (4) verbunden sind, je ein Radträger (4) mit einem Rad (5) und/oder einem Ski verbunden ist, jeweils ein Federdämpfer (9) mit dem Rocker (8) und mit einem Querlenker (2) direkt oder indirekt mittels Umlenkelementen verbunden ist, der Rocker (8) an der Rollkontrollwelle (7) fest angebunden ist, **dadurch gekennzeichnet, dass** je zwei Querlenker (2), ein Federdämpfer (9) und ein Radträger (4) als Einzelradaufhängung fungieren, die Einzelradaufhängung es ermöglicht die jeweiligen Räder (5) und/oder Skier im Wesentlichen unabhängig voneinander einzufedern, eine Rotation des Lenkers (10) um die Rollkontrollachse (12) eine Neigung des Rockers (8) und damit eine Verschiebung der Federdämpfer (9) respektive zum Fahrzeugrahmen (1) bewirkt und damit eine Neigung des Neigefahrzeugs bewirkt.

3. Zweispuriges Neigefahrwerk in einem Neigefahrzeug gemäß Anspruch 1, umfassend je Neigefahrwerk vier Querlenker (2), zwei Radträger (4) und eine Rollkontrollblattfeder (17), wobei jeweils zwei Querlenker (2) rotatorisch oder gelenkig mit dem Fahrzeugrahmen (1) und rotatorisch oder gelenkig mit einem Radträger (4) verbunden sind, je ein Radträger (4) mit einem Rad (5) und/oder einem Ski verbunden ist, die Rollkontrollwelle (7) inmitten der Rollkontrollblattfeder (17) an der Rollkontrollblattfeder (17) fest angebunden ist, die Rollkontrollblattfeder (17) am jeweiligen ende an einem in Fahrtrichtung linken und an einem in Fahrtrichtung rechten Querlenker angebunden ist, **dadurch gekennzeichnet, dass** je zwei Querlenker (2), die Rollkontrollblattfeder (17) und ein Radträger (4) als Einzelradaufhängung fungieren, die Einzelradaufhängung es ermöglicht die jeweiligen Räder (5) und/oder Skier im Wesentlichen unabhängig voneinander einzufedern, eine Rotation des Lenkers (10) um die Rollkontrollachse (12) eine Neigung der Rollkontrollblattfeder (17) und damit eine Neigung des Neigefahrzeugs bewirkt.

4. Zweispuriges Neigefahrwerk in einem Neigefahrzeug gemäß Anspruch 1, umfassend je Neigefahrwerk, zwei Querlenker (2), zwei Radträger (4) und eine Rollkontrollblattfeder (17), wobei die zwei Querlenker (2) jeweils rotatorisch oder gelenkig mit dem Fahrzeugrahmen (1) und rotatorisch oder gelenkig mit einem Radträger (4) verbunden sind, je ein Radträger (4) mit einem Rad (5) und/oder einem Ski verbunden ist, die Rollkontrollwelle (7) inmitten der Rollkontrollblattfeder (17) an der Rollkontrollblattfeder (17) fest angebunden ist, die Rollkontrollblattfeder (17) am jeweiligen ende an einem in Fahrtrichtung linken und an einem in Fahrtrichtung rechten Radträger (4) gelenkig oder rotatorisch angebunden ist, **dadurch gekennzeichnet, dass** je ein Querlenker (2), die Rollkontrollblattfeder (17) und ein Radträger (4) als Einzelradaufhängung fungieren, die Einzelradaufhängung es ermöglicht die jeweiligen Räder (5) und/oder Skier im Wesentlichen unabhängig voneinander einzufedern, eine Rotation des Lenkers (10) um die Rollkontrollachse (12) eine Neigung der Rollkontrollblattfeder (17) und damit eine Neigung des Neigefahrzeugs bewirkt.

5. Zweispuriges Neigefahrwerk in einem Neigefahrzeug gemäß Anspruch 1, umfassend je Neigefahrwerk, zwei Radträger (4), eine Rollkontrollblattfeder (17) und eine Wippblattfeder (18), wobei der Fahrzeugrahmen (1) inmitten der Wippblattfeder (18) rotatorisch an die Wippblattfeder (18) angebunden ist und die Wippblattfeder (18) am jeweiligen ende an einem in Fahrtrichtung linken und an einem in Fahrtrichtung rechten Radträger (4) gelenkig oder rotatorisch angebunden ist, je ein Radträger (4) mit einem Rad (5) und/oder einem Ski verbunden ist, die Rollkontrollwelle (7) inmitten der Rollkontrollblattfeder (17) an der Rollkontrollblattfeder (17) fest angebunden ist, die Rollkontrollblattfeder (17) am jeweiligen ende an einem in Fahrtrichtung linken und an einem in Fahrtrichtung rechten Radträger (4) gelenkig oder rotatorisch angebunden ist, **dadurch gekennzeichnet, dass** die Wippblattfeder (18), die Rollkontrollblattfeder (17) und ein Radträger (4) als Einzelradaufhängung fungieren, die Einzelradaufhängung es ermöglicht die jeweiligen Räder (5) und/oder Skier im Wesentlichen unabhängig voneinander einzufedern, eine Rotation des Lenkers (10) um die Rollkontrollachse (12) eine Neigung der Rollkontrollblattfeder (17) und damit eine Neigung des Neigefahrzeugs bewirkt.

6. Neigefahrzeug mit mindestens einem Neigefahrwerk nach einem oder mehreren der vorherigen Ansprüche, umfassend je Neigefahrwerk zwei Spurstangen (3) wobei eine jeweilige Spurstange (3) gelenkig mit einem Radträger (4) und gelenkig mit dem Lenker (10) verbunden ist, **dadurch gekennzeichnet, dass** eine Rotation des Lenkers (10) um die Lenkerachse (14) eine Lenkung der Radträger (4) und damit eine Lenkung der Räder (5) und/oder Skier bewirkt.

7. Neigefahrzeug mit mindestens einem Neigefahrwerk nach einem oder mehreren der vorherigen Ansprüche, je Neigefahrwerk umfassend zwei Spurstangen (3), einen Lenkschenkel (6) und mindestens eine Lenkstange (11), wobei der Lenkschenkel (6) rotatorisch um eine Lenkschenkelachse (15) im Fahrzeugrahmen (1) gelagert ist, eine jeweilige Spurstange (3) gelenkig mit einem Radträger (4) und gelenkig mit dem Lenkschenkel (6) verbunden ist, die mindestens eine Lenkstange (11) gelenkig mit dem Lenker (10) und gelenkig mit dem Lenkschenkel (6) verbunden ist, **dadurch gekennzeichnet, dass** eine Rotation des Lenkers (10) um die Lenkerachse (14) eine Lenkung der Radträger (4) und damit eine Lenkung der Räder (5) und/oder Skier bewirkt.

8. Neigefahrzeug mit mindestens einem Neigefahrwerk nach einem oder mehreren der vorherigen Ansprüche, umfassend mindestens ein dämpfendes Element, wobei das mindestens eine dämpfende Element an einem Ende am Fahrzeugrahmen (1) befestigt ist und am anderen Ende an der Rollkontrollwelle (7) und oder an einem Querlenker (2) und oder an einem Rocker (8) und/oder an einer Rollkontrollblattfeder (17) befestigt ist, **dadurch gekennzeichnet, dass** das dämpfende Element die Neigung des Neigefahrwerk dämpft.

9. Neigefahrzeug mit mindestens einem Neigefahrwerk nach einem oder mehreren der vorherigen Ansprüche, umfassend mindestens ein dämpfendes Elemente, wobei das mindestens eine dämpfende Element verriegelbar ist, **dadurch gekennzeichnet, dass** ein dämpfendes Element im unverriegelten Zustand eine Neigebewegung des Neigefahrwerks dämpft und eine dämpfendes Element im verriegelten Zustand eine Neigung des Neigefahrwerks blockiert.

10. Neigefahrzeug mit mindestens einem Neigefahrwerk nach einem oder mehreren der vorherigen Ansprüche, umfassend je Neigefahrwerk zwei Radträger (4), wobei ein jeweiliger Radträger mindestens drei Kugelgelenkige Anbindungen aufweist, dergestalt, dass die Kugelgelenkige Anbindung es dem Radträger ermöglichen sowohl eine Schwenkbewegung um die Fahrzeugrollachse als auch eine Lenkbewegung der Räder zu Absolvieren.

11. Neigefahrzeug mit mindestens einem Neigefahrwerk nach einem oder mehreren der vorherigen Ansprüche, umfassend je Neigefahrwerk zwei Radträger (4), wobei ein jeweiliger Radträger mindestens zwei Teile umfasst, nämlich ein Schwenkteil(4a) und eine Achsschenkel(4b), der Achsschenkel (4b) mittels einer Achse in dem Schwenkteil (4a) gelagert ist, das Schwenkteil(4a) mittels zwei weiteren Achsen jeweils an einem Querlenker (2) und/oder an einer Wippblattfeder (18) und/oder an einer Rollkontrollblattfeder (17) angebunden ist, die genannten Achsen jeweils nur einen rotatorischen Freiheitsgrad aufweisen, **dadurch gekennzeichnet, dass** das Schwenkteil (4a) eine Schwenkbewegung um die Fahrzeugrollachse absolvieren kann und der Achsschenkel (4b) eine Lenkung der Räder bewirken kann.

12. Mehrspuriges Neigefahrzeug mit direkter Neigesteuerung und Lenkung gemäß einem oder mehreren der vorherigen Ansprüche, umfassend einen Fahrersitz (16), wobei der Fahrersitz (16) am Fahrzeugrahmen (1) befestigt ist und eine Sitzende und/oder nahezu Liegende Fahrerposition aufweist, **dadurch gekennzeichnet, dass** die Lagerstelle des Lenkers (10) in der Rollkontrollwelle (7) unterhalb der Sitzebene des Fahrers positioniert ist.

13. Mehrspuriges Neigefahrzeug mit direkter Neigesteuerung und Lenkung gemäß einem oder mehreren der vorherigen Ansprüche, **dadurch gekennzeichnet, dass** die Lenkerachse (14) während eines Neigevorgangs respektive zur Fahrzeugneigung in entgegengesetzter Richtung schwängt und damit im Wesentlichen orthogonal zur Fahrbahnebene bleibt (90 +-10°).

## Claims

1. Multi-track tilting vehicle with direct tilt control and steering, comprising a two-track tilting chassis on the front axle and/or a two-track tilting chassis on the rear axle, a vehicle frame (1), a roll control shaft (7), a handlebar (10), wheels (5) and/or skis, wherein the roll control shaft (7) is mounted rotatably about a roll control axis (12) in the vehicle frame (1), the roll control axis (12) is aligned essentially parallel (0 +-20°) to the vehicle longitudinal axis and/or to the vehicle's roll axis, the handlebar (10) is mounted rotatably about a handlebar axis (14) in the roll control shaft (7), and the handlebar axis (14) is aligned essentially orthogonally (90 +-20°) to the roll control axis (12), **characterized in that** the at least one two-track tilting chassis enables tilting of the vehicle frame (1) about the vehicle roll axis and has independent wheel suspension and/or independent ski suspension, the handlebar (10) can be rotated about the roll control axis (12) and about the handlebar axis (14), a rotation of the handlebar (10) about the handlebar axis (14) causes the tilting vehicle to steer, a rotation of the handlebar (10) about the roll control axis (12) causes the tilting vehicle to tilt, the tilting and steering can be performed independently of one another using the same handlebar (10).

2. Two-track tilting chassis in a tilting vehicle according to claim 1, comprising per tilting chassis four wishbones (2), two wheel carriers (4), one rocker (8), and two shock absorbers (9), wherein each pair of wishbones (2) are connected in a rotational or articulated manner to the vehicle frame (1) and in a rotational or articulated manner to a wheel carrier (4), each wheel carrier (4) is connected to a respective wheel (5) and/or a respective ski, each shock absorber (9) is connected in a rotational or articulated manner to the rocker (8) and to a wishbone (2) directly or indirectly by means of linking elements, the rocker (8) is rigidly connected to the roll control shaft (7), **characterized in that** two wishbones (2), one shock absorber (9), and one wheel carrier (4) each function as an independent wheel suspension, the independent wheel suspension enabling the wheels (5) and/or skis to move vertically essentially independent of one another, a rotation of the handlebar (10) about the roll control axis (12) causes an inclination of the rocker (8) and thus a displacement of the shock absorbers (9) relative to the vehicle frame (1) thereby leaning the tilting vehicle.

3. Two-track tilting chassis in a tilting vehicle according to claim 1, comprising per tilting chassis four wishbones (2), two wheel carriers (4) and one roll control leaf spring (17), wherein two wishbones (2) are each connected in a rotational or articulated manner to the vehicle frame (1) and in a rotational or articulated manner to a wheel carrier (4), each wheel carrier (4) is connected to a respective wheel (5) and/or a respective ski, the roll control shaft (7) is rigidly connected to the roll control leaf spring (17) in the middle of the roll control leaf spring (17), the roll control leaf spring (17) is connected at the respective end to a left-side and a right-side wishbone in the direction of travel, **characterized in that** each two wishbones (2), the roll control leaf spring (17) and a wheel carrier (4) function as an independent wheel suspension, enabling the wheels (5) and/or skis to move vertically essentially independent of one another , a rotation of the handlebar (10) around the roll control axis (12) causes an inclination of the roll control leaf spring (17) thereby leaning the tilting vehicle.

4. Two-track tilting chassis in a tilting vehicle according to claim 1, comprising per tilting chassis, two wishbones (2), two wheel carriers (4) and a roll control leaf spring (17), wherein the two wishbones (2) are each connected rotationally or articulated to the vehicle frame (1) and rotationally or articulated to a respective wheel carrier (4), each wheel carrier (4) is connected to a respective wheel (5) and/or a respective ski, the roll control shaft (7) is rigidly connected to the roll control leaf spring (17) in the middle of the roll control leaf spring (17), the roll control leaf spring (17) is connected at the respective end to a wheel carrier (4) on the left in the direction of travel and to a wheel carrier (4) on the right in the direction of travel, **characterized in that** each wishbone (2), the roll control leaf spring (17) and a wheel carrier (4) function as an independent wheel suspension, the independent wheel suspension enables the respective wheels (5) and/or skis to move vertically essentially independent of one another, a rotation of the handlebar (10) about the roll control axis (12) causes an inclination of the roll control leaf spring (17) thereby leaning the tilting vehicle.

5. Two-track tilting chassis in a tilting vehicle according to claim 1, comprising per tilting chassis, two wheel carriers (4), a roll control leaf spring (17) and a rocker leaf spring (18), wherein the vehicle frame (1) is connected in a rotational manner to the rocker leaf spring (18) in the middle of the rocker leaf spring (18), and the rocker leaf spring (18) is connected in an articulated or rotational manner at the respective end to a wheel carrier (4) on the left in the direction of travel and to a wheel carrier on the right in the direction of travel, each wheel carrier (4) is connected to a respective wheel (5) and/or a respective ski, the roll control shaft (7) is rigidly connected in the middle of the roll control leaf spring (17) to the roll control leaf spring (17), the roll control leaf spring (17) is connected in an articulated or rotational manner at the respective end to a wheel carrier (4) on the left in the direction of travel and to a wheel carrier on the right in the direction of travel, **characterized in that** the rocker leaf spring (18), the roll control leaf spring (17) and a wheel carrier (4) acts as an independent wheel suspension, the independent wheel suspension enables the wheels (5) and/or skis to move vertically essentially independent of one another, a rotation of the handlebar (10) about the roll control axis (12) causes an inclination of the roll control leaf spring (17) thereby leaning the tilting vehicle.

6. Tilting vehicle with at least one tilting chassis according to one or more of the preceding claims, comprising two tie rods (3) per tilting chassis, wherein a respective tie rod (3) is articulated to a wheel carrier (4) and articulated to the handlebar (10), **characterized in that** a rotation of the handlebar (10) about the handlebar axis (14) causes a steering of the wheel carrier (4) and thus a steering of the wheels (5) and/or skis.

7. Tilting vehicle with at least one tilting chassis according to one or more of the preceding claims, each tilting chassis comprising two tie rods (3), a steering arm (6) and at least one steering rod (11), wherein the steering arm (6) is mounted in the vehicle frame (1) able to rotate about a steering arm axis (15), a respective tie rod (3) is articulated to a wheel carrier (4) and articulated to the steering arm (6), the at least one steering rod (11) is articulated to the handlebar (10) and articulated to the steering arm (6), **characterized in that** a rotation of the handlebar (10) about the handlebar axis (14) brings about a steering of the wheel carrier (4) and thus a steering of the wheels (5) and/or skis.

8. Tilting vehicle with at least one tilting chassis according to one or more of the preceding claims, comprising at least one damping element, wherein the at least one damping element is fastened at one end to the vehicle frame (1) and at the other end to the roll control shaft (7) and/or to a wishbone (2) and/or to a rocker (8) and/or to a roll control leaf spring (17), **characterized in that** the damping element dampens the inclination of the tilting chassis.

9. Tilting vehicle with at least one tilting chassis according to one or more of the preceding claims, comprising at least one damping element, wherein the at least one damping element is lockable, **characterized in that** a damping element in the unlocked state dampens a tilting movement of the tilting chassis and a damping element in the locked state blocks an inclination of the tilting chassis.

10. Tilting vehicle with at least one tilting chassis according to one or more of the preceding claims, comprising two wheel carriers (4) for each tilting chassis, wherein a respective wheel carrier has at least three ball-joint connections, such that the ball-joint connection enables the wheel carrier to perform both a pivoting movement about the vehicle roll axis and a steering movement of the wheels.

11. Tilting vehicle with at least one tilting chassis according to one or more of the preceding claims, comprising two wheel carriers (4) for each tilting chassis, each wheel carrier comprising at least two parts, namely a pivoting part (4a) and a steering knuckle (4b), the steering knuckle (4b) being mounted in the pivoting part (4a) by means of an axle, the pivoting part (4a) being connected to a wishbone (2) and/or to a rocker leaf spring (18) and/or to a roll control leaf spring (17) by means of two further axles, the said axles each having only one rotational degree of freedom, **characterized in that** the pivoting part (4a) can perform a pivoting movement about the vehicle roll axis and the steering knuckle (4b) can effect steering of the wheels.

12. Multi-track tilting vehicle with direct tilt control and steering according to one or more of the preceding claims, comprising a driver's seat (16), wherein the driver's seat (16) is fastened to the vehicle frame (1) and has a sitting and/or almost lying driver position, **characterized in that** the bearing point of the handlebar (10) in the roll control shaft (7) is positioned below the driver's seating level.

13. Multi-track tilting vehicle with direct tilt control and steering according to one or more of the preceding claims, **characterized in that** the handlebar axis (14) swings in the opposite direction to the vehicle inclination during a tilting process and thus remains substantially orthogonal to the roadway plane (90 +-10°).

## Revendications

1. Véhicule inclinable multi-voies à commande directe d'inclinaison et de direction, comprenant un châssis inclinable bi-voie sur l'essieu avant et/ou un châssis inclinable bi-voie sur l'essieu arrière, un cadre de véhicule (1), un arbre de contrôle de roulis (7), un guidon (10), des roues (5) et/ou des skis, **caractérisé en ce que**, l'arbre de contrôle de roulis (7) est monté rotatif autour d'un axe de contrôle de roulis (12) dans le cadre de véhicule (1), ledit axe de contrôle de roulis (12) étant aligné sensiblement parallèle (0 ±20°) à l'axe longitudinal du véhicule et/ou à l'axe de roulis du véhicule, le guidon (10) étant monté rotatif autour d'un axe de guidon (14) dans l'arbre de contrôle de roulis (7), ledit axe de guidon (14) étant aligné sensiblement orthogonal (90 ±20°) à l'axe de contrôle de roulis (12), ledit au moins un châssis inclinable bi-voie permet l'inclinaison du cadre de véhicule (1) autour de l'axe de roulis du véhicule, et comprend une suspension à roues indépendantes à amortisseur et/ou une suspension à skis indépendants à amortisseur, le guidon (10) pouvant être pivoté autour de l'axe de contrôle de roulis (12) et autour de l'axe de guidon (14), une rotation du guidon (10) autour de l'axe de guidon (14) provoque la direction du véhicule inclinable, une rotation du guidon (10) autour de l'axe de contrôle de roulis (12) provoque l'inclinaison du véhicule inclinable, l'inclinaison et la direction pouvant être effectuées indépendamment l'une de l'autre au moyen du même guidon (10).

2. Châssis inclinable pour véhicule inclinable selon la revendication 1, comprenant pour chaque châssis inclinable, quatre bras transversaux (2), deux porte-roues (4), un balancier (8), deux amortisseurs (9), **caractérisé en ce que**, chaque paire de bras transversaux (2) est articulée de manière rotative ou pivotante sur le cadre de véhicule (1) et sur un porte-roue (4) respectif, chaque porte-roue (4) est assemblé à une roue (5) et/ou un ski, chaque amortisseur (9) est relié au balancier (8) et à un bras transversal (2), soit directement soit indirectement via des éléments de liaison, le balancier (8) est fixé rigidement à l'arbre de contrôle de roulis (7), chaque ensemble de deux bras transversaux (2), un amortisseur (9) et un porte-roue (4) fonctionne comme une suspension indépendante, permettant un amortissement substantiellement indépendant des roues (5) et/ou skis, une rotation du guidon (10) autour de l'axe de contrôle de roulis (12) provoque l'inclinaison du balancier (8), entraînant un déplacement des amortisseurs (9) par rapport au cadre de véhicule (1), et provoquant ainsi l'inclinaison du véhicule inclinable.

3. Châssis inclinable pour véhicule inclinable selon la revendication 1, comprenant pour chaque châssis inclinable, quatre bras transversaux (2), deux porte-roues (4), une lame de ressort de contrôle de roulis (17), **caractérisé en ce que**, chaque paire de bras transversaux (2) est articulée sur le cadre de véhicule (1) et sur un porte-roue (4), chaque porte-roue (4) est assemblé à une roue (5) et/ou un ski, l'arbre de contrôle de roulis (7) est fixé au centre de la lame de ressort de contrôle de roulis (17), la lame de ressort de contrôle de roulis (17) étant reliée à ses extrémités à un bras transversal gauche et droit dans le sens de marche, chaque ensemble de deux bras transversaux (2), la lame de ressort de contrôle de roulis (17) et un porte-roue (4) fonctionne comme suspension indépendante, permettant un amortissement substantiellement indépendant des roues (5) et/ou skis, une rotation du guidon (10) autour de l'axe de contrôle de roulis (12) incline la lame de ressort de contrôle de roulis (17), provoquant ainsi l'inclinaison du véhicule inclinable.

4. Châssis inclinable pour véhicule inclinable selon la revendication 1, comprenant pour chaque châssis inclinable, deux bras transversaux (2), deux porte-roues (4), une lame de ressort de contrôle de roulis (17), **caractérisé en ce que**, les deux bras transversaux (2) sont chacun articulés de manière rotative ou pivotante sur le cadre du véhicule (1) et sur un porte-roue (4), chaque porte-roue (4) est assemblé à une roue (5) et/ou un ski, l'arbre de contrôle de roulis (7) est fixé au centre de la lame de ressort de contrôle de roulis (17), la lame de ressort de contrôle de roulis (17) est reliée à ses extrémités à un porte-roue gauche et droit dans le sens de marche, chaque ensemble d'un bras transversal (2), de la lame de ressort de contrôle de roulis (17) et d'un porte-roue (4) forme une suspension indépendante, permettant un amortissement substantiellement indépendant des roues (5) et/ou skis, une rotation du guidon (10) autour de l'axe de contrôle de roulis (12) incline la lame de ressort de contrôle de roulis (17), provoquant ainsi l'inclinaison du véhicule inclinable.

5. Châssis inclinable pour véhicule inclinable selon la revendication 1, comprenant pour chaque châssis inclinable, deux porte-roues (4), une lame de ressort de contrôle de roulis (17), une lame de ressort basculante (18), **caractérisé en ce que**, le cadre du véhicule (1) est articulé au centre de la lame de ressort basculante (18), la lame de ressort basculante (18) est reliée à ses extrémités à un porte-roue gauche et droit dans le sens de marche, chaque porte-roue (4) est assemblé à une roue (5) et/ou un ski, l'arbre de contrôle de roulis (7) est fixé au centre de la lame de ressort de contrôle de roulis (17), la lame de ressort de contrôle de roulis (17) est reliée à ses extrémités à un porte-roue gauche et droit dans le sens de marche,l'ensemble lame de ressort basculante (18), lame de ressort de contrôle de roulis (17) et porte-roue (4) forme une suspension indépendante, permettant un amortissement substantiellement indépendant des roues (5) et/ou skis, une rotation du guidon (10) autour de l'axe de contrôle de roulis (12) incline la lame de ressort de contrôle de roulis (17), provoquant ainsi l'inclinaison du véhicule inclinable.

6. Véhicule inclinable comprenant au moins un châssis inclinable selon une ou plusieurs des revendications précédentes, comprenant par châssis inclinable deux barres d'accouplement (3), chaque barre d'accouplement (3) étant articulée à un porte-roue (4) et au guidon (10), **caractérisé en ce que** une rotation du guidon (10) autour de l'axe de guidon (14) provoque un braquage des porte-roues (4) et ainsi un braquage des roues (5) et/ou skis.

7. Véhicule inclinable comprenant au moins un châssis inclinable selon une ou plusieurs des revendications précédentes, comprenant par châssis inclinable, deux barres d'accouplement (3), un pivot de direction (6), au moins une barre de direction (11), **caractérisé en ce que**, le pivot de direction (6) est monté rotatif autour d'un axe de pivot de direction (15) dans le cadre du véhicule (1), chaque barre d'accouplement (3) est articulée à un porte-roue (4) et au pivot de direction (6), ladite au moins une barre de direction (11) est articulée au guidon (10) et au pivot de direction (6), une rotation du guidon (10) autour de l'axe de guidon (14) provoque un braquage des porte-roues (4) et ainsi un braquage des roues (5) et/ou skis.

8. Véhicule inclinable comprenant au moins un châssis inclinable selon une ou plusieurs des revendications précédentes, comprenant au moins un élément amortisseur, ledit au moins un élément amortisseur étant fixé à une extrémité au cadre du véhicule (1) et à l'autre extrémité à l'arbre de contrôle de roulis (7) et/ou à un bras transversal (2) et/ou à un balancier (8) et/ou à une lame de ressort de contrôle de roulis (17), **caractérisé en ce que** l'élément amortisseur amortit l'inclinaison du châssis inclinable.

9. Véhicule inclinable comprenant au moins un châssis inclinable selon une ou plusieurs des revendications précédentes, comprenant au moins un élément amortisseur, ledit au moins un élément amortisseur étant verrouillable, **caractérisé en ce qu'**un élément amortisseur à l'état déverrouillé amortit un mouvement d'inclinaison du châssis inclinable et qu'un élément amortisseur à l'état verrouillé bloque une inclinaison du châssis inclinable.

10. Véhicule inclinable comprenant au moins un châssis inclinable selon une ou plusieurs des revendications précédentes, comprenant par châssis inclinable deux porte-roues (4), chaque porte-roue présentant au moins trois liaisons à rotule, de telle sorte que les liaisons à rotule permettent au porte-roue d'effectuer à la fois un mouvement de pivotement autour de l'axe de roulis du véhicule et un mouvement de braquage des roues.

11. Véhicule inclinable comprenant au moins un châssis inclinable selon une ou plusieurs des revendications précédentes, comprenant par châssis inclinable deux porte-roues (4), chaque porte-roue comprenant au moins deux parties, à savoir une partie pivotante (4a) et un pivot de fusée (4b), le pivot de fusée (4b) étant monté dans la partie pivotante (4a) au moyen d'un axe, la partie pivotante (4a) étant reliée par deux axes supplémentaires à un bras transversal (2) et/ou à une lame de ressort basculante (18) et/ou à une lame de ressort de contrôle de roulis (17), lesdits axes n'ayant chacun qu'un seul degré de liberté en rotation, **caractérisé en ce que** la partie pivotante (4a) peut effectuer un mouvement de pivotement autour de l'axe de roulis du véhicule et que le pivot de fusée (4b) peut provoquer le braquage des roues.

12. Véhicule inclinable multi-voies à commande directe d'inclinaison et de direction selon une ou plusieurs des revendications précédentes, comprenant un siège conducteur (16), ledit siège conducteur (16) étant fixé au cadre du véhicule (1) et présentant une position de conduite assise et/ou quasi-allongée, **caractérisé en ce que** le point de pivotement du guidon (10) dans l'arbre de contrôle de roulis (7) est positionné en dessous du plan d'assise du conducteur.

13. Véhicule inclinable multi-voies à commande directe d'inclinaison et de direction selon une ou plusieurs des revendications précédentes, **caractérisé en ce que** l'axe de guidon (14) oscille dans la direction opposée à l'inclinaison du véhicule lors d'une manoeuvre d'inclinaison, restant ainsi sensiblement orthogonal (90 ±10°) au plan de la chaussée.
